# EUROPEAN PATENT APPLICATION

(11) **EP 4 398 430 A1**
(43) Date of publication of application: **10.07.2024**
(21) Application number: 23307424.4
(22) Date of filing: 29.12.2023
(51) Int. Cl.: H02B 11/133, H02B 11/173

(54) **DRAWER FOR A SWITCHGEAR AND SWITCHGEAR**

(30) Priority: 03.01.2023 CN 202320009119 U
(71) Applicant: Schneider Electric Industries SAS, 92500 Rueil-Malmaison (FR)
(72) Inventor: ZHOU, Huidong, Shanghai, 201203 (CN); NARAYAN, Naveen, 560067 Bangalore (IN)
(74) Representative: Manitz Finsterwald Patent- und Rechtsanwaltspartnerschaft mbB

(57) **Abstract**

The present disclosure relates to a drawer for a switchgear and a switchgear. The drawer (100) comprises an isolated position, a test position and a working position, and comprises: a fixed section (130); and a movable section slidably disposed on the fixed section (130), wherein the movable section comprises a drawer front section (110) and a drawer rear section (120) movable relative to the drawer front section (110), the drawer front section (110) comprises a door (112) and a propulsion device (300) for moving the drawer rear section (120), and the propulsion device (300) is configured to be operated when the door (112) is closed to cause the drawer rear section (120) to slide relative to the fixed section (130) so to be selectively located in the isolated position, the test position or the working position. In this way, switching of the drawer among the three positions is achieved while the door of the drawer is always closed, and the safety of the apparatus is improved.

## Description

### FIELD

Embodiments of the present disclosure generally relate to switchgears, and particularly to drawers for switchgears.

### BACKGROUND

Switchgears such as drawer type switchgears are widely used in power distribution systems. The switchgear comprises a frame and one or more drawers mounted on the frame. The switchgear comprises a busbar for connection to a power source and a load. A switching device for switching on/off the power system and an associated sensing device may be included in the drawer. The drawer comprises a primary insert for a primary circuit and a secondary insert for a control loop.

For a conventional drawer type switchgear, when the drawer switches between different positions, a front door panel of the drawer moves along with the drawer so as to switch the drawer among different positions regardless the drawer provided with a driving mechanism or without a driving mechanism. When the drawer leaves a working position to a test position and an isolated position, an IP protection level of such drawer cannot reach IP4X, not to mention IP54. Thus, in some cases where the use environment is severe (e.g., where there is more dust in the use environment), there is a risk that insulation performances of the drawer type switchgear will fall. In addition, there is a potential risk of arcing to injure the operator when the drawer is inserted into or removed from the working position. There is a need to further improve the drawer type switchgear.

### SUMMARY

Embodiments of the present disclosure provide a drawer for a switchgear and a switchgear, intended to address one or more of the above problems and other potential problems.

According to a first aspect of the present disclosure, there is provided a drawer for a switchgear. The drawer comprises an isolated position, a test position and a working position and comprises: a fixed section; and a movable section slidably disposed on the fixed section, wherein the movable section comprises a drawer front section and a drawer rear section movable relative to the drawer front section, wherein the drawer front section comprises a door and a propulsion device for moving the drawer rear section, and the propulsion device is configured to be operated while the door is closed to cause the drawer rear section to slide relative to the fixed section so as to be selectively located in the isolated position, the test position or the working position. According to the present disclosure, since the drawer employs a three-stage structure, it is possible to perform the switching among three positions while a door of the drawer is always in a closed state. The drawer effectively reduces a risk of insulation degradation and/or a risk of electric arcing to injure an operator when the drawer is manually inserted into or removed from the working position.

In some embodiments, the drawer front section further comprises a locking device configured to lock the drawer front section together with the fixed section, wherein the fixed section and the drawer front section are engaged and can be drawn together while the drawer front section and the fixed section are locked to each other; and the fixed section is disengaged from the drawer front section and cannot be moved while the drawer front section and the drawer rear section are unlocked from each other. Thus, movement of the entire drawer can be achieved by selectively engaging the fixed section.

In some embodiments, the locking device comprises a first locking member and a first actuation assembly for driving the first locking member, the first locking member is configured to move linearly between a locked position where the first locking member engages the fixed section and an unlocked position where the first locking member disengages from the fixed section. The operation of the first locking member can thereby be achieved by the first actuation assembly.

In some embodiments, the first actuation assembly comprises a first button assembly mounted on the door, the first button assembly configured to be depressed to drive the first locking member to linearly move between the locked position and the unlocked position. Thereby, the first locking member can be conveniently driven by the button assembly mounted on the door.

In some embodiments, the locking device further comprises a transmission assembly coupled to the first actuation assembly, and the transmission assembly is configured to convert a linear movement of the button assembly in a first direction into a linear movement of the first locking member in a second direction perpendicular to the first direction. Thereby, the layout of the parts within the drawer can be facilitated.

In some embodiments, the locking device comprises: a first frame; a first unlocking push plate movably mounted in the first frame and configured to be pushed by the first actuation assembly; and a drive plate pivotally mounted to the first frame, the drive plate including a first arm pivotally coupled to the first unlocking push plate and a second arm pivotally coupled to the first locking member, the drive plate configured to be rotated by the first unlocking push plate to move the first locking member. Thus, the linear movement-rotary movement-linear movement conversion can be achieved.

In some embodiments, the locking device may further comprise a lock enable device configured to be operable to permit unlocking of the drawer front section from the fixed section when the drawer rear section is in the isolated position and to be inoperable to prevent unlocking of the drawer front section from the fixed section when the drawer rear section is in the test position or working position. Thereby, the safety of the operation of the drawer is improved, and the drawer is prevented from being unlocked in a non-isolated position.

In some embodiments, the locking device further comprises a first stop plate movably mounted on the first frame, wherein the first stop plate is configured to be driven by the drawer rear section such that the first stop plate abuts against the first locking member to prevent the first locking member from moving in the second direction when the drawer rear section is in the test position or the working position, and the first stop plate does not abut against the first locking member to allow the first locking member to move in the second direction when the drawer rear section is in the isolated position. Thereby, the first stop plate can be enabled by the position of the drawer rear section.

In some embodiments, the first stop plate comprises a pushing portion configured in such a way that the pushing portion protrudes from the frame in the first direction when the drawer rear section is in the test position or the working position, and the pushing portion is pushed by the drawer rear section when the drawer rear section moves from the test position to the isolated position. Thereby, the first stop plate can be driven conveniently.

In some embodiments, the first stop plate comprises a clearance groove, the first locking member comprises an abutment arm, the abutment arm abuts against the first stop plate to prevent the first locking member from moving in the second direction when the drawer rear section is in the test position or the working position, and the clearance groove receives the abutment arm to allow the first locking member to move in the second direction when the drawer rear section is in the isolated position. Thereby, cooperation between the first stop plate and the first locking member can be conveniently achieved.

In some embodiments, the propulsion device comprises a nut-screw actuator, the drawer rear section being secured to a nut of the nut-screw actuator.

In some embodiments, the propulsion device comprises a second frame mounted on the drawer front section and a locking device mounted on the second frame, the locking device being configured to lock the drawer rear section when the drawer rear section is in the isolated position, the test position or the working position to prevent the propulsion device from continuing to drive the drawer rear section. Thereby, the drawer rear section may be prevented from being moved arbitrarily.

In some embodiments, the locking device comprises: a second locking member movably mounted on the second frame and comprising a lock tooth; and a locking wheel fixedly disposed on the screw of the nut-screw actuator and comprising a plurality of circumferentially disposed first locking grooves, the lock tooth being engageable with the first locking grooves to prevent the screw from rotating. Thereby, the locking of the drawer rear section can be achieved.

In some embodiments, the locking device further comprises a biasing spring configured to bias the second locking member in a direction toward the first locking groove. Thereby, automatic return of the second locking member can be achieved.

In some embodiments, the locking device further comprises a second unlocking push plate for driving the second locking member to move towards or away from the first locking groove, the second locking member comprises a first sliding groove, the second unlocking push plate comprises an unlocking portion extending at least partially through the first sliding groove, and the second unlocking push plate is configured to drive the second locking member to move towards or away from the first locking groove in such a way that different positions of the unlocking portion contact with an edge of the first sliding groove. Thereby, the control of the position of the second locking member can be achieved by the plate-groove structure.

In some embodiments, the unlocking portion comprises an inclined surface having a varying height in a direction in which the first sliding groove extends. Thus, the driving may be achieved by a contour of an edge of the plate.

In some embodiments, the second unlocking push plate further comprises a receiving notch disposed on an edge of the plate, the receiving notch is configured to engage an edge of the first sliding groove of the second locking member to maintain the second locking member in a position away from the first locking groove. Thus, the locking may be achieved by the contour of the edge of the plate.

In some embodiments, the locking device further comprises a second actuation assembly for the second unlocking push plate, the second actuation assembly comprise a second button assembly mounted on the door, and the second button assembly is configured to be pressed to drive the second unlocking push plate to move in a direction in which the movable section slides. Thus, the locking device may be conveniently operated by the button assembly.

In some embodiments, the locking device further comprises a reset spring for the second unlocking push plate, the reset spring configured to provide an acting force for return of the second unlocking push plate. Thereby, automatic return of the second unlocking push plate may be achieved.

In some embodiments, the locking device further comprises a second stop plate for the second locking member, the second stop plate is fixedly mounted on the drawer rear section and comprises three second locking grooves for limiting the second locking member, and positions of the three second locking grooves correspond to the isolated position, the test position or the working position of the drawer rear section, respectively. Thereby, the automatic locking of different stations of the drawer rear section is achieved.

In some embodiments, the second locking member comprises a second sliding groove, the second stop plate extends at least partially through the second sliding groove, and the second stop plate is configured to define a position of the second locking member relative to the second locking groove in such a way that the corresponding second locking groove contacts an edge of the second sliding groove. Thereby, the driving of the second locking member may be achieved by the plate-groove structure.

In some embodiments, the second stop plate comprises a higher portion and a lower portion having different heights in an extending direction of the second sliding groove between second locking grooves corresponding to the isolated position and the test position of the drawer rear section and between second locking grooves corresponding to the test position and the working position of the drawer rear section, respectively, and the second stop plate is configured in such a way that the second stop plate abuts against an edge of the second sliding groove at the higher portion to push the second locking member away from the first locking groove, and the second stop plate does not abut against an edge of the second sliding groove at the lower portion. Thereby, control of the position of the second locking member can be achieved by the contour of the edge of the plate.

According to a second aspect of the present disclosure, there is provided a switchgear. The switchgear comprises: a frame; and the drawer according to the first aspect mounted on the frame.

### BRIEF DESCRIPTION OF THE DRAWINGS

The above and other objectives, features, and advantages of example embodiments of the present disclosure will become more apparent from the following detailed description with reference to the accompanying drawings. In the figures, several embodiments of the present disclosure are shown in an exemplary but unrestrictive manner.
FIG. 1 shows an overall schematic view of a switchgear according to an embodiment of the present disclosure.
FIG. 2 shows a perspective view of a drawer according to an embodiment of the present disclosure.
FIG. 3 shows a perspective view of a drawer front section of a movable section of a drawer according to an embodiment of the present disclosure as viewed from a front side.
FIG. 4 shows a schematic view of a drawer front section of a movable section of a drawer according to an embodiment of the present disclosure, as viewed from a rear side.
FIG. 5 shows a perspective view of a drawer rear section of a movable section of a drawer according to an embodiment of the present disclosure.
FIG. 6 shows a perspective view of a fixed section of a drawer according to an embodiment of the present disclosure.
FIG. 7 shows a perspective view of a locking device according to an embodiment of the present disclosure with a stop plate in a stop state.
FIG. 8 shows a schematic perspective view of a locking device according to an embodiment of the present disclosure with the stop plate in an unlocked state.
FIG. 9 shows an exploded view of a locking device according to an embodiment of the present disclosure.
FIG. 10 shows details of an internal structure of a locking device according to an embodiment of the present disclosure.
FIG. 11 shows a perspective view of a propulsion device according to an embodiment of the present disclosure.
FIG. 12 shows an exploded schematic view of a propulsion device according to an embodiment of the present disclosure.
FIG. 13-FIG. 15 respectively show schematic diagrams of unlocking and self-locking operations of a propulsion device according to an embodiment of the present disclosure.

In all figures, the same or corresponding reference numbers denote the same or corresponding parts.

### DETAILED DESCRIPTION OF EMBODIMENTS

Preferred embodiments of the present disclosure will be described as follows in greater detail with reference to the drawings. Although preferred embodiments of the present disclosure are illustrated in the drawings, it is to be understood that the present disclosure described herein can be implemented in various manners, not limited to the embodiments illustrated herein. Rather, these embodiments are provided to make the present disclosure described herein clearer and more complete and convey the scope of the present disclosure described herein completely to those skilled in the art.

As used herein, the term "comprises" and its variants are to be read as open-ended terms that mean "comprises, but is not limited to." The term "or" is to be read as "and/or" unless the context clearly indicates otherwise. The term "based on" is to be read as "based at least in part on." The term "one example implementation" and "an example implementation" are to be read as "at least one example implementation." The term "another implementation" is to be read as "at least one other implementation." The terms indicating placement or positional relationship such as "up", "down", "front" and "rear" are based on the orientation or positional relationship shown in the figures, and are only for the convenience in describing the principles of the present disclosure, rather than indicating or implying that the designated elements must have a particular orientation, be constructed or operated in a particular orientation, and thus should not be construed as limiting the present disclosure.

According to the present disclosure, there is provided a drawer configured to performing switching operations among three positions (i.e., a working position, a test position, an isolated position as well known in the art) while a front door of the drawer is closed. This arrangement reduces a risk of insulation degradation and a risk of electric arcing to injure an operator when the drawer is manually inserted into or removed from the working position. Detailed structures of a switchgear and a drawer according to embodiments of the present disclosure will be described with reference to the accompanying drawings.

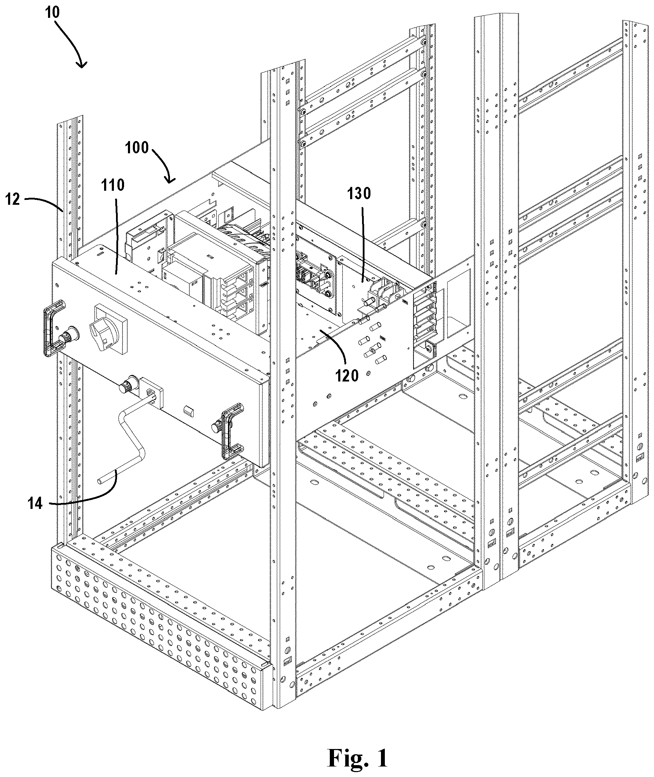

FIG. 1 shows an overall schematic view of a switchgear according to an embodiment of the present disclosure. As shown in FIG. 1, the switchgear 10 comprises a frame 12 and a drawer 100 movably disposed in the frame 12. The drawer 100 is, as a whole, insertable into and removable from the frame 12. The drawer 100 comprises a door 115 exposed to an outside of the entire frame 12, and the door 115 may be provided with an operating member for operating the drawer 100 and/or a display member for providing a state inside the drawer 100. In a state where the drawer 100 is mounted in place, the door 115 closes the opening where the drawer 100 is located.

Various switching devices, such as circuit breakers, for switching on/off a power system, and associated sensing devices may be provided within the drawer. The drawer comprises a primary insert for a primary circuit and a secondary insert for a control loop. The primary insert of the drawer is engageable with a primary circuit component within the switchgear to turn on/off the primary circuit. The secondary insert is a component for controlling operations of the primary insert; the secondary insert is engageable with a control loop component within the switchgear to form the control loop for control of the primary insert.

The drawer 100 typically comprises three positions, namely, an isolated position, a test position, and a working position. When the drawer is in the isolated position, the primary insert in the drawer is disconnected from the busbar of the primary circuit in the switchgear, and the secondary insert in the drawer is disconnected from the control circuit in the switchgear. When the drawer is in the test position, the primary insert in the drawer is disconnected from the main circuit in the switchgear, while the secondary insert in the drawer remains connected to the control circuit in the switchgear. In this case, whether the control loop is functioning properly may be tested by operating the control device. When the drawer is in the working position which corresponds to an operating state in which the drawer is operating in the switchgear, the primary insert in the drawer remains connected to the busbar of the primary circuit in the switchgear, and the secondary insert in the drawer remains connected to the control circuit in the switchgear.

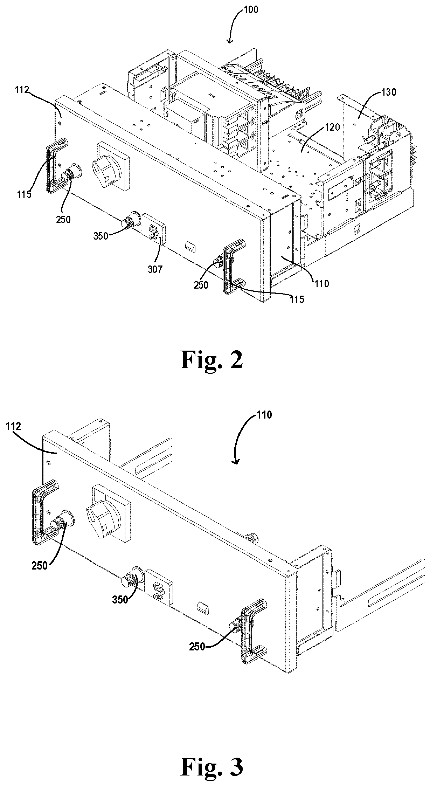

According to the drawer of the present disclosure, switching operations among the three-positions (i.e., the working position, the test position, and the isolated position) of the drawer is implemented in a state that the door 115 of the drawer is closed. This improves the insulation performance and safety of the drawer. FIG. 2 through FIG. 6 show structural details of the drawer according to an embodiment of the present disclosure, respectively. As shown in FIG. 2 through FIG. 6, the drawer 100 is implemented in a three-stage structure. The drawer 100 comprises a fixed section 130 and a movable section. When the drawer 100 is installed in place in the opening of the frame 12 of the switchgear 10, the fixed section 130 can be separated from the movable section and cannot be operated by the movable section. The movable section is slidably disposed on the fixed section 130. The movable section comprises a drawer front section 110 and a drawer rear section 120 movable relative to the drawer front section 110. The drawer front section 110 comprises a door 112 and a propulsion device 300 for moving the drawer rear section 120. Only when the door 112 is closed, the propulsion device 300 is allowed to be operated to cause the drawer rear section 120 to slide relative to the fixed section 130 to be selectively positioned in the isolated position, the test position or the working position.

The fixed section 130 may be configured to support the movable section (i.e., the drawer front section 110 and the drawer rear section 120). The primary and secondary inserts of the drawer may be disposed on the drawer rear section 120. After the drawer 100 as a whole is installed in the frame 12, the fixed section 130 is separate from the movable section and cannot be moved by the movable section. The user may move the drawer rear section 120 by operating the propulsion device 300 of the drawer front section 110 to achieve the switching among the three positions.

In some embodiments, the drawer front section 110 may comprise one or more locking devices 200. The locking device 200 is configured to lock the drawer front section 110 and the fixed section 130 to each other. In the locked state of the locking device 200, the drawer front section 110 and the fixed section 130 are locked to each other, so that the movable section and the fixed section 130 of the drawer can move relative to the switchgear as a whole. When the locking device 200 is in an unlocked state, the drawer front section 110 and the fixed section 130 are unlocked from each other, whereupon the fixed section 130 is located in the switchgear and cannot be operated by the user. At this time, the user may move the drawer rear section 120 between different stations by operating the propulsion device 300 provided on the drawer front section 110.

According to embodiments of the present disclosure, when the drawer rear section 120 is in the isolated position, the drawer is in a safe state and the user may move the drawer as a whole. As shown in FIG. 2 and FIG. 3, the door 112 of the drawer may be provided with an operation handle 115, and the user may move the drawer as a whole by pushing and pulling the operation handle 115. To this end, when the drawer rear section 120 is in the isolated position, the locking device 200 can be operated to allow the drawer front section 110 to unlock from the fixed section 130. When the drawer rear section 120 is in the test position or the working position, the drawer is in a live state ( i.e., the primary insert path or the secondary insert path is closed), and the user should be prevented from moving the drawer as a whole. In this case, the user is not allowed to move the drawer by pushing and pulling the operation handle 115. For this reason, the locking device 200 cannot be operated to prevent the drawer front section 110 from being unlocked from the fixed section 130 when the drawer rear section 120 is in the test position or working position. To this end, the locking device 200 may further comprise a lock enable device configured to be operable to permit unlocking of the drawer front section from the fixed section when the drawer rear section is in the isolated position and to be inoperable to prevent unlocking of the drawer front section from the fixed section when the drawer rear section is in the test position or working position.

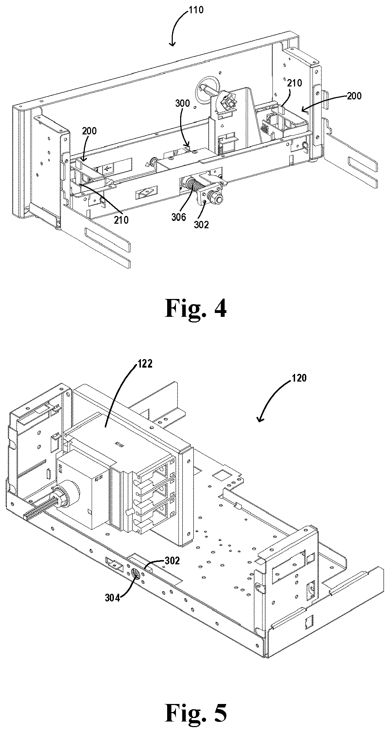

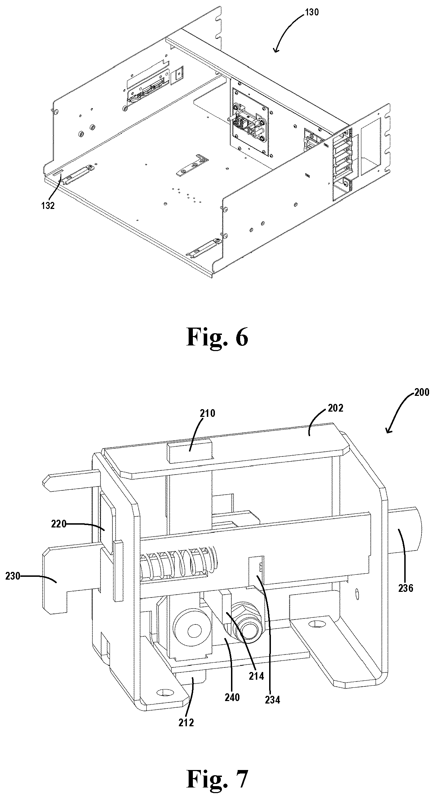

In some embodiments, as shown in FIG. 4 and FIG. 6, the drawer front section 110 may comprise a pair of locking devices 20. Each locking device 20 may comprise a first locking member 210. In the illustrated embodiment, the first locking member 210 is a sheet member extending in an up-and-down direction, and the first locking member 210 is movable in the up-and-down direction to achieve engagement with or disengagement from the fixed section 130. The fixed section 130 may comprise a locking groove 132 provided at a position corresponding to the first locking member 210. In a state where the drawer front section 110 and the fixed section 130 are locked with each other, the first locking member 210 engages with the locking groove 132 of the fixed section 130. In a state where the drawer front section 110 and the fixed section 130 are unlocked from each other, the first locking member 210 is disengaged from the locking groove 132 to achieve unlocking from the fixed section 130. It is to be understood that the illustrated locking devices 20 are merely exemplary, for example, the number of locking devices may be one or other number, and the structures and shapes of the first locking member 210 and the locking groove 132 may be structures and shapes other than those as shown. In addition, the positions of the first locking member 210 and the locking groove 132 may be reversed.

In some embodiments, the locking device 200 may comprise a first actuation assembly for actuating the first locking member 210. The first actuation assembly may be implemented in a variety of forms. In some embodiments, as shown in FIG. 2 and FIG. 3, the first actuation assembly comprises a first button assembly 250 mounted on the door 112. The user may actuate the first locking member 210 by pressing the first button assembly 250. It should be understood that this is merely exemplary; instead of the first button assembly 250, a knob or other suitable drive means may be used.

FIG. 7-FIG. 10 show structural details of a locking device 300 according to an embodiment of the present disclosure, respectively. As shown in FIG. 7 through FIG. 10, the locking device 200 comprises a first frame 202 and a first unlocking push plate 220. The first frame 202 may be part of a frame body of the drawer front section 110. The first frame 202 may be used to support various functional components of the locking device 200. The first unlocking push plate 220 is movably mounted in the first frame 202 and can be pushed by the first actuation assembly. The user may push the first unlocking push plate 220 through the first actuation assembly to achieve the unlocking and/or locking operation of the first locking member 210.

In some embodiments, the locking device 200 further comprises a transmission assembly coupled to the first actuation assembly. The transmission assembly is configured to convert a linear movement of the button assembly in a first direction into a linear movement in a second direction perpendicular to the first direction of the first locking member 210. The locking device 200 is disposed inside the drawer so that the user cannot directly operate the first locking member 210, and the user may indirectly operate the first locking member 210 through a transmission assembly. For example, the user may only operate the actuation assembly disposed on the door at the door 112 to effect operation of functional components within the locking device 200.

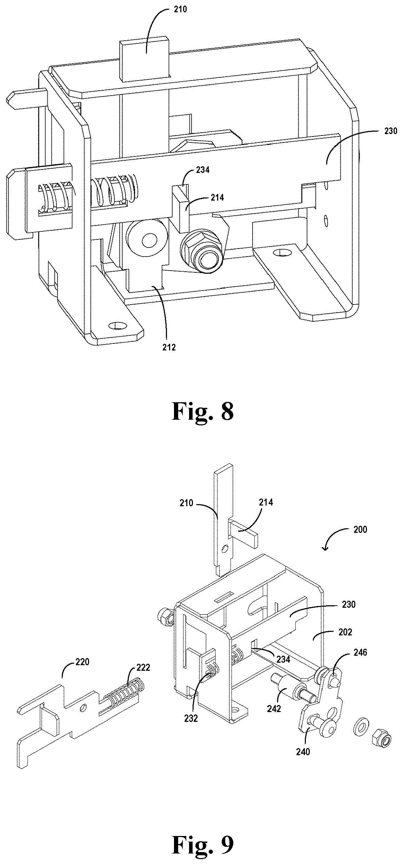

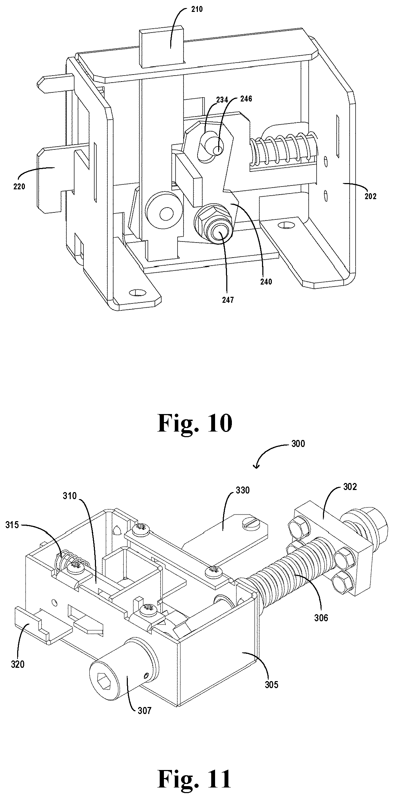

In some embodiments, as shown in FIG. 7-FIG. 10, the locking device 200 may comprise a drive plate 240 that is pivotally mounted to the first frame 202. The drive plate 240 may be secured to the first frame 202 by a pivot shaft 242. The drive plate 240 is driven to rotate by the first unlocking push plate 220. Rotation of the drive plate 240 in turn moves the first locking member 210. As shown in FIG. 9 and FIG. 10, the drive plate 240 comprises a first arm pivoted to the first unlocking push plate 220 and a second arm pivoted to the first locking member 210. When the user presses the first actuating member (e.g., the first button member 250), the first button assembly 250 will push the first unlocking push plate 220 to move in a left-right direction in the figure. The drive plate 240 may be provided with a sliding groove 246 and pivotally coupled to the first unlocking push plate 220. The linear movement of the first unlocking push plate 220 causes the drive plate 240 to rotate. Since the second arm of the drive plate 240 is integrally provided with the drive plate 240, the second arm also rotates synchronously with the rotation of the drive plate 240. Since the drive plate 240 is pivotally connected to the first locking member 210, the rotation of the drive plate 240 moves the first locking member 210 in an up-down direction. The locking device 200 may comprise a reset spring 222 for returning the first unlocking push plate 220. After the force applied to the first unlocking push plate 220 is released, the reset spring 222 may return the first unlocking push plate 220 to allow the next operation by the user.

In some embodiments, the locking device 200 may also include a first stop plate 230 movably mounted on the first frame 202. The first stop plate may serve as the lock enable device. Whether the user is allowed to operate the first button assembly 250 or not is implemented by the position of the first stop plate 230. The first stop plate 230 may be disposed at an appropriate position to be driven according to the position of the drawer rear section 120. When the drawer rear section 120 is in the test position or working position, the first stop plate 230 abuts against the first locking member 210 to prevent the first locking member 210 from moving. In this case, even if the user presses the first button assembly 250, the first button assembly 250 cannot be pressed. When the drawer rear section 120 is in the isolated position, the first stop plate 230 does not abut against the first locking member 210 to allow the first locking member 210 to move. In this case, when the user presses the first button assembly 250, the first button assembly 250 can be pressed to drive the first locking member 210 to move.

In some embodiments, as shown in FIG. 7, the first stop plate 230 comprises a push portion 236 configured in such a way that the push portion protrudes from the frame in a first direction when the rear section 120 of the drawer is in the test position or the working position. The push portion is pushed by the drawer rear section 120 as the drawer rear section 120 moves from the test position to the isolated position. Thus, driving of the first stop plate 230 may be accomplished by the mutual positional relationship of the push portion 236 and the drawer rear section 120.

In some embodiments, as shown in FIG. 7-FIG. 9, the first stop plate 230 may comprise a clearance groove 234. The first locking member 210 comprises an abutment arm 212 projecting from its body. When the drawer rear section 120 is in the test position or the working position, the abutment arm 212 abuts against the first stop plate 230 to prevent the first locking member 210 from moving in the second direction; the clearance groove 234 receives the abutment arm 212 to allow the first locking member 210 to move in the second direction when the drawer rear section 120 is in the isolated position.

In addition to the locking device, the drawer further comprises a propulsion device 300 installed at the drawer front section 110. The propulsion device 300 may be operated manually or automatically by the user. As shown in FIG. 1, the propulsion device 300 may comprise a user interface 307 mounted on the door 112. In the case of the manual operation shown in FIG. 1, the user may insert a tool handle 14 on the user interface 307 and operate the propulsion device 300 by operating the tool handle 14. The propulsion device may comprise a linear actuator, such as a nut-screw actuator, configured to drive the drawer rear section 120 to linearly move. As shown in FIG. 4 and FIG. 5, an actuating portion such as a screw 306 of the nut-screw actuator may be mounted to drawer front section 110. The drawer rear section 120 may comprise a screw hole 304 adapted to receive the screw 306 and a nut 302. The drawer rear section 120 is secured to the nut 302 of the nut-screw actuator. Thus, the nut 302 is driven by the rotation of the screw 306 to move linearly together with the drawer rear section 120. It should be understood that in the illustrated embodiment, the linear actuator is a manual actuator, which is merely exemplary, and that the linear actuator may be an automatic actuator, such as an electric cylinder.

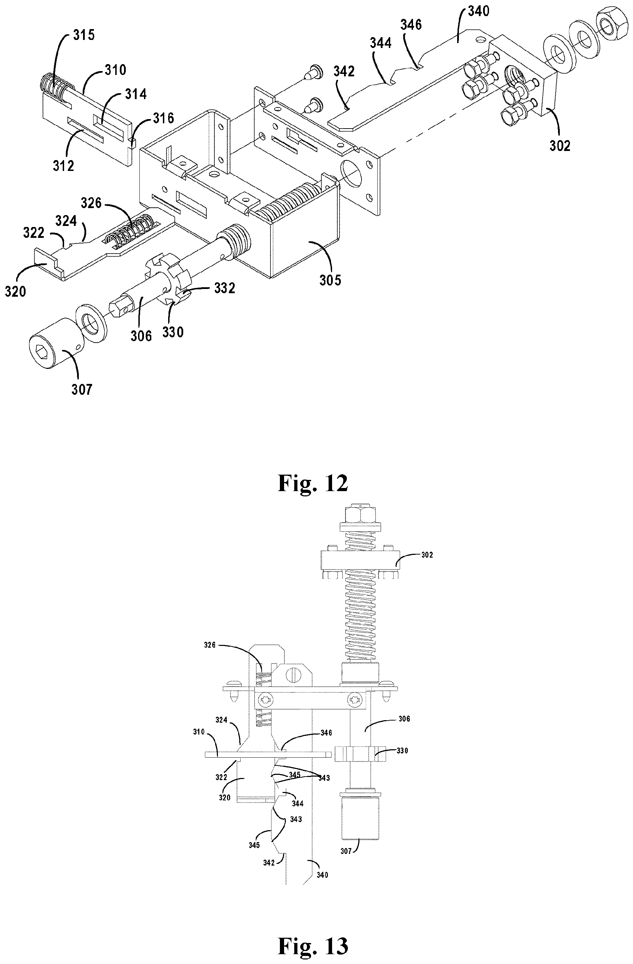

Structural details of the propulsion device 300 according to an embodiment of the present disclosure are described below with reference to FIG. 11-FIG. 15. As shown in FIG. 11 and FIG. 12, the propulsion device 300 may comprise a second frame 305. The second frame 305 may be formed as part of the drawer front section 110, or may be positioned to the drawer front section 110. The functional parts of the propulsion device 300 may be mounted on the second frame 305.

In some embodiments, the propulsion device 300 may comprise a locking device mounted to the drawer front section 110. The locking device is configured to lock the drawer rear section 120 when the drawer rear section 120 is in the isolated position, the test position or the working position to prevent the propulsion device 300 from continuing to drive the drawer rear section 120. Thereby, the drawer rear section 120 may be prevented from moving by the locking device.

In some embodiments, as shown in FIG. 11 and FIG. 12, the locking device may comprise a second locking member 310 and a locking wheel 330. The second locking member 310 is movably mounted on a second frame 305 and comprises a lock tooth 316. The locking wheel 330 is fixedly disposed on the screw 306 of the nut-screw actuator. The locking wheel 330 may comprise a plurality of first locking grooves 332 disposed in a circumferential direction. The second locking member 310 is movable between a locked position adjacent the locking wheel 330 and an unlocked position remote from the locking wheel 330. When the second locking member 310 is in the locked position, the lock tooth 316 engages the first locking grooves 332 to prevent rotation of the screw. At this time, even if the user operates the linear actuator, the screw cannot be rotated since the lock tooth 316 engages with the first locking groove 332. When the second locking member 310 is in the unlocked position, the lock tooth 316 is disengaged from the first locking groove 332. At this time, when the user operates the linear actuator, the screw will be allowed to rotate.

In some embodiments, as shown in FIG. 11 and FIG. 12, the locking device may further comprise a biasing spring 315 configured to bias the second locking member 310 in a direction toward the first locking groove 332. In this case, the second locking member 310 may be conveniently positioned by controlling the position of the second locking member 310 relative to the biasing spring 315. In some embodiments, the second locking member 310 may comprise a first sliding groove 312 that may be used for unlocking control of the second locking member 310. In some embodiments, the second locking member 310 may comprise a second sliding groove 314 that may be used for automatic locking of the second locking member 310.

In some embodiments, as shown in FIG. 11 and FIG. 12, the locking device may further comprise a second unlocking push plate 320 for driving the second locking member 310 to move toward or away from the first locking groove 332. The second unlocking push plate 320 may comprise an unlocking portion 324. The unlocking control of the second locking member 310 may be achieved by the unlocking portion by changing the position of the second locking member 310 with respect to the biasing spring 315. In some embodiments, the unlocking portion 324 may extend through the first sliding groove 312. The second unlocking push plate 320 is configured to drive the second locking member 310 toward or away from the first locking groove 332 in such a way that different portions of the unlocking portion 324 contact with an edge of the first sliding groove 312. In some embodiments, the unlocking portion 324 comprises an inclined surface having a varying height in a direction in which the first sliding groove 312 extends. Thus, the unlocking function may be achieved only by the cooperation between the edge shape of the unlocking plate and the first sliding groove.

In some embodiments, as shown in FIG. 11 and FIG. 12, the second unlocking push plate 320 may further comprise a receiving notch 322 disposed on an edge of the plate. The receiving notch 322 is configured to engage an edge of the first sliding groove 312 of the second locking member 310 to lock the second locking member 310 in a position away from the first locking groove 332. Thus, the control of the locking and unlocking positions of the second locking member 310 may be achieved by a plate edge of the second unlocking push plate 320.

In some embodiments, also referring to FIG. 1 and FIG. 2, the locking device may further comprise a second actuation assembly for a second unlocking push plate 320. The second actuation assembly may comprise a second button assembly 350 mounted on the door. The second button assembly 350 can be pressed to drive the second unlocking push plate 320 to move in a direction in which the movable section slides. In this case, the user may achieve the unlocking of the locking device by only pressing the second button assembly 350 on the door 112 of the drawer front section 110. It should be appreciated that instead of the second button assembly 350, the second actuation assembly may be implemented in any other suitable form, such as a knob or the like.

In some embodiments, as shown in FIG. 11 and FIG. 12, the locking device further comprises a reset spring 326 for the second unlocking push plate 320, the reset spring configured to provide an acting force to return the second unlocking push plate 320. In this case, when the user presses the second button assembly 350 on the door 112 of the drawer front section 110, the reset spring 326 stores energy; when the second button assembly 350 is released, the reset spring 326 may push the second unlocking push plate 320 to return in preparation for the next press.

In some embodiments, the locking device can provide a locking function at a predetermined station in addition to providing the unlocking function. When the drawer rear section 120 is moved to a predetermined position, such as the isolated position, the test position, or the working position, it is also possible to automatically lock the drawer rear section 120 in the corresponding position to prevent the user from further moving the propulsion device 300. In some embodiments, the self-locking function described above may be accomplished by providing a second stop plate 340. The second stop plate 340 may be used to provide additional position limitation for the second locking member 310. The second stop plate 340 is fixedly mounted on the drawer rear section 120 and thus the second stop plate 340 moves with the drawer rear section 120. The second stop plate 340 may comprise three second locking grooves 342, 344, 346 for limiting the second locking member 310, and the positions of the second locking grooves 342, 344, 346 correspond to the isolated position, test position or working position of the drawer rear section 120, respectively. Along with the operation of the propulsion device 300, the drawer rear section 120 moves together with the second stop plate 340. The second locking member 310 is subjected to a restoring force of the reset spring. The second locking member 310 engages with the first locking groove 332 on the locking wheel 330 at a position where the second stop plate 340 corresponds to the second sliding grooves 342, 344, 346 to achieve self-locking.

The second stop plate 340 may interact with the second locking member 310 in a variety of ways. In some embodiments, as shown in FIG. 12, the second locking member 310 may comprise a second sliding groove 314. The second stop plate 340 extends at least partially through the second sliding channel 314, and the second stop plate 340 is configured to define a position of the second locking member 310 relative to the second locking groove in such a way that a corresponding second locking groove contacts an edge of the second sliding groove 314. Thus, the self-locking function of the second locking member 310 may be achieved by a simple plate-groove structure.

The second stop plate 340 may comprise a member for driving the second locking member 310. In some embodiments, as shown in FIG. 12, the second stop plate 340 comprises a higher portion 345 and a lower portion 343 of different heights between the second locking groove 342 corresponding to the isolated position and the second locking groove 344 corresponding to the test position of the drawer rear section 120. The higher portion 345 and the lower portion 343 may be implemented in various forms such as a convex portion, an inclined portion, a curved portion, a straight portion, etc. The second stop plate 340 abuts against an edge of the second sliding groove 314 at the higher portion to push the second locking member 310 away from the first locking groove 332. With the higher portion 345, the second stop plate 340 may be pushed as far away from the locked position as possible, thereby permitting the second unlocking push plate 320 to return. The interference with the second locking member 310 may be avoided by the lower portion 343, without affecting the unlocking operation of the second unlocking push plate 320.

Similarly, the second stop plate 340 comprises a higher portion 345 and a lower portion 343 having different heights between the second locking groove 344 corresponding to the test position of the drawer rear section 120 and the second locking groove 346 corresponding to the working position of the drawer rear section 120. The higher portion 345 and the lower portion 343 may be implemented in various forms such as a convex portion, an inclined portion, a curved portion, a straight portion, etc. The second stop plate 340 abuts against the edge of the second sliding groove 314 at the higher portion to push the second locking member 310 away from the first locking groove 332. With the higher portion 345, the second stop plate 340 may be pushed as far away from the locked position as possible, thereby permitting the second unlocking push plate 320 to return. The interference with the second locking member 310 may be avoided by the lower portion 343, without affecting the unlocking operation of the second unlocking push plate 320.

According to the locking apparatus of an embodiment of the present disclosure, in addition to self-locking at a predetermined position, a one-key unlocking function can also be achieved. The operation principle of the one-key unlocking will be described with reference to FIG. 13-FIG. 15.

FIG. 13 shows the process for unlocking the drawer rear section 120 from the working position. When the user presses the second button assembly 350, the second button assembly 350 pushes the second unlocking push plate 320. The unlocking portion 324 of the second unlocking push plate 320 will move in the first sliding groove 312 of the second locking member 310 against the acting force of the reset spring 326. The unlocking portion 324 will abut against the edge of the first sliding groove 312 to push the second locking member 310 to move away from the locking wheel 330 against the acting force of the reset spring 315. Thus, the lock tooth 316 of the second locking member 310 disengages from the first locking grooves 332 of the locking wheel 330, so that the second locking member 310 is unlocked from the locking wheel 330. As the second unlocking push plate 320 continues to move, the receiving notch 322 of the second unlocking push plate 320 captures the edge of the first sliding groove 312 of the second locking member 310, thereby keeping the second locking member 310 in an unlocked state.

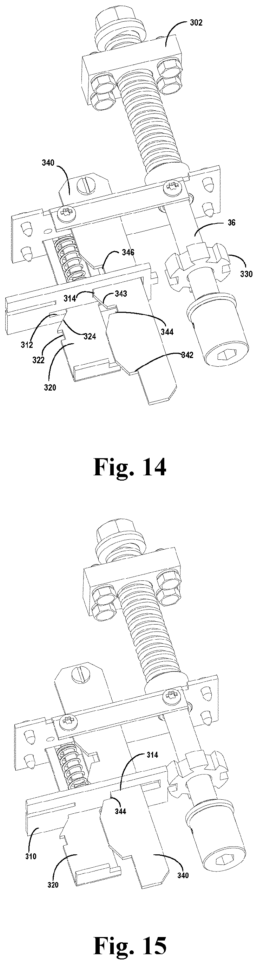

From the state shown in FIG. 13, as the second locking member 310 is unlocked from the locking wheel 330 which means the user is allowed to move the screw-nut assembly, the screw 306 will rotate to drive the nut 302 in a linear movement when the user rotates the screw 306 through the user interface 307. The nut 302 is installed with the drawer rear section 120, and the drawer rear section 120 moves from the working position shown in FIG. 13 to the test position (see the state shown in FIG. 15) while the nut 302 makes a linear movement.

FIG. 14 shows a state of an intermediate process of moving the drawer rear section 120 from the working position shown in FIG. 13 to the test position. As shown in FIG. 14, as the drawer rear section 120 moves, the second stop plate 340 is fixedly mounted to the drawer rear section 120 so that the second stop plate 340 moves together from the working position to the test position. Since the second stop plate 340 also extends through the second sliding groove 314 of the second locking member 310, the second stop plate 340 also moves in the second sliding groove 314 of the second locking member 310 during the movement of the second stop plate 340. Initially, the abutment portion 343 of the second stop plate 340 does not abut against an edge of the second sliding groove 314 of the second locking member 310. As the second stop plate 340 moves, the higher portion 345 of the second stop plate 340 begins to abut against the edge of the second sliding groove 314, thereby further pushing the second locking member 310 to move away from the locking wheel 330 against the elastic force of the reset spring 315 of the second locking member 310. Thus, the second stop plate 340 is removed from the receiving notch 322 of the second unlocking push plate 320. The second unlocking push plate 320 returns to the initial state under the action of the reset spring 326 to get ready for the next press. FIG. 14 shows a return process of the second unlocking push plate 320 under the action of the reset spring 326.

From the state of FIG. 14, after the higher portion 345 of the second stop plate 340 passes over the second sliding groove 314, the lower portion 343 of the second stop plate 340 does not interfere with the edge of the second sliding groove 314 of the second locking member 310. As the drawer rear section 120 moves, the second stop plate 340 also continues to move. As shown in FIG. 15, when the second locking groove 344 of the second stop plate 340 corresponding to the test position is aligned with the edge of the second sliding groove 314 of the second locking member 310, the edge of the second sliding groove 314 of the second locking member 310 is engaged with the second locking groove 344 by the reset spring 315, whereby the second locking member 310 and the locking wheel 330 are engaged with each other to be automatically maintained in the locked state.

The operation of the propulsion device according to the embodiment of the present disclosure has been described above with the movement from the working position to the test position being taken as an example. The movement process from the test position to the isolated position is similar, and a detailed description thereof will be omitted. In addition, the movement processes from the isolated position to the test position and from the test position to the working position may be similarly understood, and detailed description thereof will be omitted.

The drawer according to the embodiments of the present disclosure can achieve the complicated movement of the drawer at a low cost (e.g., a simple plate-groove structure, a button assembly, etc.) and achieve the switching of the drawer among the isolated position, the test position and the working position in the state where the door is closed, and ensure the operational safety of the apparatus.

In addition, while operations are depicted in a particular order, this should not be understood as requiring that such operations are performed in the particular order shown or in sequential order, or that all illustrated operations are performed to achieve the desired results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular implementations. Certain features that are described in the context of separate implementations may also be implemented in combination in a single implementation. Rather, various features described in a single implementation may also be implemented in multiple implementations separately or in any suitable sub-combination.

Although the subject matter has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A drawer (100) for a switchgear, the drawer comprising an isolated position, a test position and a working position, and comprising:
a fixed section (130); and
a movable section slidably disposed on the fixed section (130), wherein the movable section comprises a drawer front section (110) and a drawer rear section (120) movable relative to the drawer front section (110),
wherein the drawer front section (110) comprises a door (112) and a propulsion device (300) for moving the drawer rear section (120), and the propulsion device (300) is allowed to be operated while the door (112) is closed to cause the drawer rear section (120) to slide relative to the fixed section (130) so as to be selectively located in the isolated position, the test position or the working position.

2. The drawer according to claim 1, wherein the drawer front section (110) further comprises a locking device (200) configured to lock the drawer front section (110) together with the fixed section (130), wherein the fixed section (130) and the drawer front section (110) are engaged and can be drawn together while the drawer front section (110) and the fixed section (130) are locked to each other; and the fixed section (130) is disengaged from the drawer front section (110) and cannot be moved while the drawer front section (110) and the drawer fixed section (130) are unlocked from each other,.

3. The drawer according to claim 2, wherein the locking device (200) comprises a first locking member (210) and a first actuation assembly for driving the first locking member (210), the first locking member (210) is configured to move linearly between a locked position where the first locking member (210) engages the fixed section (130) and an unlocked position where the first locking member (210) disengages from the fixed section (130).

4. The drawer according to claim 3, wherein the first actuation assembly comprises a first button assembly (250) mounted on the door, and the first button assembly (250) is configured to be depressed to drive the first locking member (210) to linearly move between the locked position and the unlocked position.

5. The drawer according to claim 4, wherein the locking device (200) further comprises a transmission assembly coupled to the first actuation assembly, and the transmission assembly is configured to convert a linear movement of the button assembly in a first direction into a linear movement of the first locking member (210) in a second direction perpendicular to the first direction.

6. The drawer according to claim 5, wherein the locking device (200) comprises:
a first frame (202);
a first unlocking push plate (220) movably mounted in the first frame (202) and configured to be pushed by the first actuation assembly; and
a drive plate (240) pivotally mounted to the first frame (202), the drive plate (240) including a first arm pivotally coupled to the first unlocking push plate (220) and a second arm pivotally coupled to the first locking member (210), the drive plate configured to be rotated by the first unlocking push plate (220) to move the first locking member (210).

7. The drawer according to claim 6, wherein the locking device (200) further comprises a lock enable device configured to be operable to permit unlocking of the drawer front section (120) from the fixed section (130) when the drawer rear section (120) is in the isolated position and to be inoperable to prevent unlocking of the drawer front section (110) from the fixed section (130) when the drawer rear section (120) is in the test position or working position.

8. The drawer according to claim 7, wherein the lock enable device further comprises a first stop plate (230) movably mounted on the first frame (202), wherein the first stop plate (230) is configured to be driven by the drawer rear section (120) such that the first stop plate (230) abuts against the first locking member (210) to prevent the first locking member (210) from moving in the second direction when the drawer rear section (120) is in the test position or the working position, and the first stop plate (230) does not abut against the first locking member (210) to allow the first locking member (210) to move in the second direction when the drawer rear section (120) is in the isolated position.

9. The drawer according to claim 8, wherein the first stop plate (230) comprises a pushing portion (236) configured in such a way that the pushing portion protrudes from the frame in the first direction when the drawer rear section (120) is in the test position or the working position, and the pushing portion is pushed by the drawer rear section (120) when the drawer rear section (120) moves from the test position to the isolated position.

10. The drawer according to claim 8, wherein the first stop plate (230) comprises a clearance groove (234), the first locking member (210) comprises an abutment arm (212), the abutment arm (212) abuts against the first stop plate (230) to prevent the first locking member (210) from moving in the second direction when the drawer rear section (120) is in the test position or the working position, and the clearance groove (234) receives the abutment arm (212) to allow the first locking member (210) to move in the second direction when the drawer rear section (120) is in the isolated position.

11. The drawer according to any of claims 1-10, wherein the propulsion device (300) comprises a nut-screw actuator, the drawer rear section (120) being secured to a nut (302) of the nut-screw actuator.

12. The drawer according to claim 11, wherein the propulsion device (300) comprises a second frame (305) mounted on the drawer front section (110) and a locking device mounted on the second frame (110), the locking device being configured to lock the drawer rear section (120) when the drawer rear section (120) is in the isolated position, the test position, or the working position to prevent the propulsion device (300) from continuing to drive the drawer rear section (120).

13. The drawer according to claim 12, wherein the locking device comprises:
a second locking member (310) movably mounted on the second frame (305) and comprising a lock tooth (316); and
a locking wheel (330) fixedly disposed on a screw (306) of the nut-screw actuator and comprising a plurality of circumferentially disposed first locking grooves (332), the lock tooth (306) being engageable with the first locking groove (322) to prevent the screw from rotating.

14. The drawer according to claim 13, wherein the locking device further comprises a biasing spring (315) configured to bias the second locking member (310) in a direction toward the first locking groove (332).

15. The drawer according to claim 13, wherein the locking device further comprises a second unlocking push plate (320) for driving the second locking member (310) to move towards or away from the first locking groove (332), the second locking member (310) comprises a first sliding groove (312), the second unlocking push plate (320) comprises an unlocking portion (324) extending at least partially through the first sliding groove (312), and the second unlocking push plate (320) is configured to drive the second locking member (310) to move towards or away from the first locking groove (332) in such a way that different positions of the unlocking portion (324) contact with an edge of the first sliding groove (312).

16. The drawer according to claim 15, wherein the unlocking portion (324) comprises an inclined surface having a varying height in a direction in which the first sliding groove (312) extends.

17. The drawer according to claim 15, wherein the second unlocking push plate (320) further comprises a receiving notch (322) disposed on an edge of the plate, the receiving notch (322) is configured to engage an edge of the first sliding groove (312) of the second locking member (310) to maintain the second locking member (310) in a position away from the first locking groove (332).

18. The drawer according to claim 15, wherein the locking device further comprises a second actuation assembly for the second unlocking push plate (320), the second actuation assembly comprises a second button assembly mounted on the door, and the second button assembly is configured to be pressed to drive the second unlocking push plate (320) to move in a direction in which the movable section slides.

19. The drawer according to claim 18, wherein the locking device further comprises a reset spring for the second unlocking push plate (320), the reset spring configured to provide an acting force for return of the second unlocking push plate (320).

20. The drawer according to any of claims 13-19, wherein the locking device further comprises a second stop plate (340) for the second locking member (310), the second stop plate (340) is fixedly mounted on the drawer rear section (120) and comprises three second locking grooves for limiting the second locking member (310), and positions of the three second locking grooves correspond to the isolated position, the test position or the working position of the drawer rear section (120), respectively.

21. The drawer according to claim 20, wherein the second locking member (310) comprises a second sliding groove (314), the second stop plate (340) extends at least partially through the second sliding groove (314), and the second stop plate (340) is configured to define a position of the second locking member (310) relative to the second locking groove in such a way that the corresponding second locking groove contacts an edge of the second sliding groove (314).

22. The drawer according to claim 21, wherein the second stop plate (340) comprises a higher portion (345) and a lower portion (343) having different heights in an extending direction of the second sliding groove (314) between second locking grooves (342, 344) corresponding to the isolated position and the test position of the drawer rear section (120) and/or between second locking grooves (344, 346) corresponding to the test position and the working position of the drawer rear section (120), respectively, and the second stop plate (340) is configured in such a way that the second stop plate (340) abuts against an edge of the second sliding groove (314) at the higher portion to push the second locking member (310) away from the first locking groove (322), and the second stop plate (340) does not abut against an edge of the second sliding groove (314) at the lower portion.

23. A switchgear (10), comprising
a frame (12); and
a drawer according to any of claims 1-22 mounted on the frame.
